# EUROPEAN PATENT APPLICATION

(11) **EP 4 156 055 A1**
(43) Date of publication of application: **29.03.2023**
(21) Application number: 22197247.4
(22) Date of filing: 22.09.2022
(51) Int. Cl.: G06Q 10/0875, G06Q 30/0601, H04L 9/32, H04L 9/00

(54) **SYSTEM AND METHOD FOR GENERATING A NON-FUNGIBLE TOKEN ASSOCIATED TO AN ITEM**

(30) Priority: 22.09.2021 GB 202113543
(71) Applicant: Kwikt Limited, London EC2A 2BB (GB)
(72) Inventor: Read, Simon, London (GB); Qayam, Yasir Adeel, Borehamwood (GB); Shaikh, Owais Hassan, Karachi (PK); Gogulamudi, Kirthi, London (GB)
(74) Representative: Sach, Greg Robert

(57) **Abstract**

The present invention relates to a method for creating a non-fungible token associated to an item, wherein the method comprises the steps of:
- providing general information about the item (2);
- providing information about the owner of the item (3);
- confirming the information about the owner of the item (4); and
- generating the non-fungible token based on the general information about the item, wherein the step of generating the non-fungible token comprises storing the confirmed information about the owner of the item in the non-fungible token (5).

## Description

### TECHNICAL FIELD

The present invention relates to a method for generating a non-fungible token associated to an item, and, in particular, to an improved method for generating an irrefutable and permanent record of ownership and creating a fully transferable and tradeable asset, with a verifiable audit trail of activity.

### BACKGROUND

When a medical device such as a pacemaker or a deep brain stimulation device is accessed and/or updated, it is important to first verify that it is allowed to correspondingly access and/or to update the medical device, in order to avoid significant health risks. Further, it is important to incorporate security between communication devices, for example Internet of Things (IOT)-devices, to avoid significant security issues.

Therein, it is known to use utility tokens in applications that require immutable evidence of valid agreements or contracts between different parties, provenance or ownership, what has been proven as extremely reliable.

A utility token is a simple token that enables future access to items respectively assets or products or services offered by an organization. Thus, a utility token offers a specific utility within a decentralized application. Therein, utility tokens usually are a form of digital assets created for spending within a blockchain ecosystem.

Further, a non-fungible token is a unique and non-interchangeable unit of data stored in a digital ledger, respectively a digital asset that contains identifying information recorded in one or more smart contracts. In particular, a non-fungible token is a unit of data stored on a digital ledger, respectively a blockchain ledger, that can be sold and traded, wherein the non-fungible token can be associated with a particular digital or physical asset and a license to use the asset for a specific purpose.

Non-fungible tokens are advantageous regarding proof of ownership of an item, wherein since non-fungible tokens are on a blockchain network, they can help in associating ownership to a single user or account. In particular, non-fungible tokens are indivisible and cannot be distributed among multiple owners. Further, non-fungible tokens are respectively unique, wherefore they can be used to verify authenticity of an item. Furthermore, non-fungible tokens are easily tradeable freely on particular markets with a wide range of options for trading.

However, once a non-fungible token is lost or stolen, it is generally irretrievable. Further, there is a risk of false or corrupted data inherent in the file validation processes and non-fungible tokens are usually stored on centralized servers which are vulnerable to attacks. Therefore, there is a need for a method for generating an improved non-fungible token.

US 2021/00295324 discloses a method for a system for a computer based open innovation, wherein information regarding one or more tangible or non-tangible assets are received with an asset valuation device and a valuation signal is created based on the asset information, the valuation signal is received with a self-executing code device and a self-executing code signal is created based on the valuation signal, the valuation signal is received with an air router device having both, a low band radio channel and an internet router channel for redundant internet communications, and a malicious code removal device for scrubbing malicious code from the data received and a node voting request signal is created based on the valuation signal, the node voting request signal is received with a mesh network having a plurality of node devices and vote confirmation signals are created based on the node voting request signal, and wherein non-fungible token generation is performed with one or more computing devices connected to each of the respective node devices based on the one or more tangible or non-tangible assets, including tracking ownership and valuation of the one or more tangible or non-tangible assets, based on the asset information regarding the one or more tangible or non-tangible assets.

It is an object of the present invention to provide a method for generating an improved non-fungible token associated to an item.

This object is solved by the subject matter of the independent claims, wherein advantageous embodiments are claimed in the dependent claims.

### SUMMARY

According to one embodiment of the invention, a method for generating a non-fungible token associated to an item is provided, wherein general information about the item is provided, information about the owner of the item is provided, the information about the owner of the item is confirmed, and the non-fungible token is generated based on the general information about the item, wherein the step of generating the non-fungible token comprises storing the confirmed information about the owner of the item in the non-fungible token.

Here an item is a product or an asset, respectively a tangible asset or a non-tangible asset. Further, general information about the item is information defining the item and can for example include information about a type of the item, information about a classification of the item, or information about a location of the item, wherein the general information about the item can for example be provided by an owner of the item, a producer of the item or a seller of the item.

The information about the owner of the item can for example comprise information about the identity and/or biometric identifiers of the owner. Further, that the information about the owner is confirmed means that the information about the owner is checked, respectively validated.

That the confirmed information about the owner of the item is stored in the non-fungible token has the advantage that the lawful owner of the item can always be identified, whereby immutable trust can be created. The method can also be used to reissue a stolen or lost non-fungible token in a simple manner to its lawful owner, wherein the non-fungible token can be reissued based on the owner's validated identity and a proof of creation of the item, wherein retrieving the non-fungible token can be further subject to legal due diligence, and wherein the lost or stolen original non-fungible token is burnt.

Further, the non-fungible token can be generated in an effective and cost-efficient manner, as the provided information can easily be provided via known input means, wherefore no expensive and time-consuming modifications of the corresponding data processing system are required.

Therefore, a method for generating an improved non-fungible token is provided.

The method can further comprise the step of confirming the general information about the item, wherein the non-fungible token is generated based on the confirmed general information about the item.

Here, that the general information about the item is confirmed means that the information about the owner is checked, respectively validated.

Thereby, trust and security can be further improved.

The step of confirming the information about the owner of the item can comprise verifying the identity of the owner of the item and/or biometric identifiers of the owner of the user.

Here, biometric identifiers are the distinctive, measurable characteristics used to label and describe individuals.

Thus, the information about the owner of the item can easily be confirmed via known means, wherefore no expensive and time-consuming modifications of the corresponding data processing system are required. Further, technical features apart from the data processing system are taken into account when confirming the information about the owner of the item.

The method comprise the steps of, for all parts of the item, respectively providing and validating information about the creation of the corresponding part of the item, wherein, for all parts of the item, the validated information about the creation of the corresponding part of the item is respectively stored in the non-fungible token together with information about when the corresponding part of the item was created and/or an IP address used when creating the corresponding file or part of the item and/or an electronic signature of the creator of the corresponding file or part of the item.

Here, a part of the item is a part of the item that has been created during creation of the item, for example an electronic part or a file. Further, the information about the creation of a part of the item includes general information about the creation of the corresponding part, for example how the part has been created, or what data has been included.

Thus, it is ensured that all files or parts relating to the creation of the item are validated and recorded in the non-fungible token, with corresponding time information, an IP address and an electronic signature, whereby a clear and irrefutable audit trail to establish identity and provenance is generated.

In one embodiment, the method comprises the step of using a cryptographic function to create a digest based on the confirmed information about the owner of the item and/or the validated information about the creation of each of the parts of the item, respectively together with the information when the corresponding part of the item was created and/or the IP address used when creating the corresponding part of the item and/or the electronic signature of the creator of the corresponding part of the item, wherein the digest is stored in the non-fungible token.

Here, a cryptographic function is an algorithm that takes an arbitrary amount of data input and produces a fixed-size output of enciphered text, respectively a cryptographic digest.

Thus, a cryptographic digest can be created based on the provided and validated and then stored in the non-fungible token, whereby security risks can be further reduced. Therein, the cryptographic digest can easily be created via known applications, wherefore no expensive and time-consuming modifications are required.

In one embodiment, the method further comprises the step of storing the non-fungible token on a decentralized storage system.

Here, that the non-fungible token is stored in a decentralized storage system, for example a decentralized blockchain ledger, means that the non-fungible token is stored across multiple locations, or nodes, that are run by individuals or organizations that share their extra disk space for a fee.

Therein, with decentralized storage the highest level of security can be established, as there is no central point of failure.

Further, the method can comprise the step of providing at least one governance parameter for the non-fungible token, wherein the step of generating the non-fungible token comprises generating the non-fungible token based on the general information about the item and the at least one governance parameter.

Here, a governance parameter is a parameter that autonomously executes a preprogrammed set of actions when at least one set criterion regarding governance is met, wherein these actions may for example include reissuing, dynamically changing based on certain circumstances, restricting, permitting, freezing, or burning respectively destroying the created non-fungible token based on one or more set criterions.

By taking into account governance parameters, the generated non-fungible token can be further optimized in terms of security, efficiency and usability.

According to a further embodiment of the invention, a method for authenticating an item is provided, wherein a non-fungible token associated to the item is generated by a method for generating a non-fungible token associated to an item as described above, and wherein the item is authenticated based on the generated non-fungible token associated to the item.

Thus, a method for authenticating items based on improved non-fungible tokens is provided. Therein, that the confirmed information about the owner of the item is stored in the non-fungible token has the advantage that the lawful owner of the item can always be identified, whereby immutable trust can be created, and wherein a stolen or lost non-fungible token can also be reissued in a simple manner to its lawful owner, wherein the non-fungible token can be reissued based on the owner's validated identity and a proof of creation of the item, wherein retrieving the non-fungible token can be further subject to legal due diligence, and wherein the lost or stolen original non-fungible token is burnt. Further, the non-fungible token can be created in an effective and cost-efficient manner, as the information provided by at least one further user can easily be provided via known input means, wherefore no expensive and time-consuming modifications of the corresponding computer system are required.

According to still a further embodiment of the invention, a system for generating a non-fungible token associated to an item is provided, wherein the system is configured to execute a method generating a non-fungible token associated to an item as described above.

Thus, a system for generating an improved non-fungible token associated to an item is provided. Therein, that the confirmed information about the owner of the item is stored in the non-fungible token has the advantage that the lawful owner of the item can always be identified, whereby immutable trust can be created. The system can also be used to reissue a stolen or lost non-fungible token in a simple manner to its lawful owner, wherein the non-fungible token can be reissued based on the owner's validated identity and a proof of creation of the item, wherein retrieving the non-fungible token can be further subject to legal due diligence, and wherein the lost or stolen original non-fungible token is burnt. Further, the non-fungible token can be created in an effective and cost-efficient manner, as the information provided by at least one further user can easily be provided via known input means, wherefore no expensive and time-consuming modifications of the corresponding computer system are required.

According to still another embodiment of the invention, a system for authenticating an item is provided, wherein the system comprises a receiver that is configured to receive a non-fungible token associated to an item generated by a system for generating a non-fungible token associated to an item as described above, and wherein the system is configured to execute a method for authenticating an item as described above.

Thus, a system for authenticating items based on an improved non-fungible token is provided. Therein, that the confirmed information about the owner of the item is stored in the non-fungible token has the advantage that the lawful owner of the item can always be identified, whereby immutable trust can be created, wherein a stolen or lost non-fungible token can also be reissued in a simple manner to its lawful owner, wherein the non-fungible token can be reissued based on the owner's validated identity and a proof of creation of the item, wherein retrieving the non-fungible token can be further subject to legal due diligence, and wherein the lost or stolen original non-fungible token is burnt. Further, the non-fungible token can be created in an effective and cost-efficient manner, as the information provided by at least one further user can easily be provided via known input means, wherefore no expensive and time-consuming modifications of the corresponding computer system are required.

According to still a further embodiment of the invention, a computer program product comprising instructions which, when executed by a computer, cause the computer to carry out the steps of the method for generating a non-fungible token associated to an item as described above is provided.

Thus, an improved computer program that is configured to execute a method for generating an improved non-fungible token associated to an item is provided. Therein, that the confirmed information about the owner of the item is stored in the non-fungible token has the advantage that the lawful owner of the item can always be identified, whereby immutable trust can be created. The system can also be used to reissue a stolen or lost non-fungible token in a simple manner to its lawful owner, wherein the non-fungible token can be reissued based on the owner's validated identity and a proof of creation of the item, and wherein retrieving the non-fungible token can be further subject to legal due diligence, and wherein the lost or stolen original non-fungible token is burnt. Further, the non-fungible token can be created in an effective and cost-efficient manner, as the information provided by at least one further user can easily be provided via known input means, wherefore no expensive and time-consuming modifications of the corresponding computer system are required.

### DESCRIPTION OF THE DRAWINGS

Embodiments of the invention will now be described with reference to the drawings.
Figure 1 illustrates a flow chart of a method for authenticating items according to embodiments of the invention;
Figure 2 illustrates a system for authenticating items according to embodiments of the invention.

### DETAILED DESCRIPTION

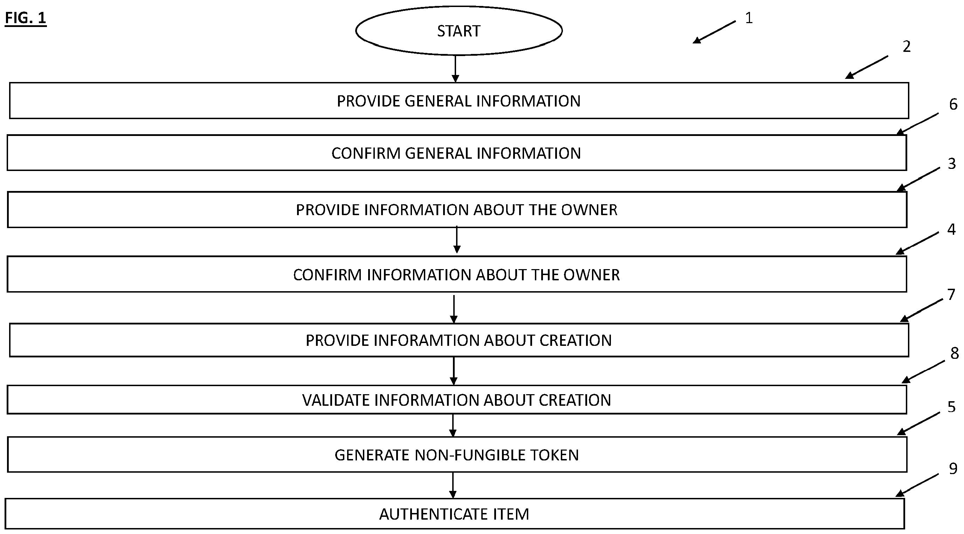

Figure 1 illustrates a flow chart of a method 1 for authenticating items according to embodiments of the invention.

When a medical device such as a pacemaker or a deep brain stimulation device is accessed and/or updated, it is important to first verify that it is allowed to correspondingly access and/or to update the medical device, in order to avoid significant health risks.

For example, there are implantable devices used to monitor physiological parameters and to deliver stimulation signals and/or therapy to selected organs. An external programmer is often used by physicians or technicians to communicate data with an implantable device. The data may include measured parameters, electrocardiograms, markers, instructions, identification information and other such data.

With the advent of far field communications for implantable devices, cloud-based software and/or parameter updates are possible. Whether the data used by the implantable device is set or updated by an external, near-filed programmer or a far field programmer or cloud system, it is essential to prevent unauthorized or unintended communications with an implantable device. Such communications can result in a minor inconvenience or tragic, life threatening, consequences or any level of risk in between those extremes.

Further, it is important to incorporate security between communication devices, for example Internet of Things (IOT)-devices, to avoid significant security issues.

For example, it is important to ensure traceability of the data and operations created and performed, respectively, by IoT-devices.

Therein, it is known to use utility or non-fungible tokens in applications that require immutable evidence of valid agreement or contracts between different parties, provenance or ownership, what has been proven as extremely reliable.

A utility token is a simple token that enables future access to items respectively assets or products or services offered by an organization. Thus, a utility token offers a specific utility within a decentralized application. Therein, utility tokens usually are a form of digital assets created for spending within a blockchain ecosystem.

Further, a non-fungible token is a unique and non-interchangeable unit of data stored in a digital ledger, respectively a digital asset that contains identifying information recorded in one or more smart contracts. In particular, a non-fungible token is a unit of data stored on a digital ledger, respectively a blockchain ledger, that can be sold and traded, wherein the non-fungible token can be associated with a particular digital or physical asset and a license to use the asset for a specific purpose.

Non-fungible tokens are advantageous regarding proof of ownership of an item, wherein since non-fungible tokens are on a blockchain network, they can help in associating ownership to a single user or account. In particular, non-fungible tokens are indivisible and cannot be distributed among multiple owners. Further, non-fungible tokens are respectively unique, wherefore they can be used to verify authenticity of an item. Furthermore, non-fungible tokens are easily tradeable freely on particular markets with a wide range of options for trading.

However, once a non-fungible token is lost or stolen, it is generally irretrievable. Further, there is a risk of false or corrupted data inherent in the file validation processes and non-fungible tokens are usually stored on centralized servers which are vulnerable to attacks. Therefore, there is a need for a method for creating generating an improved non-fungible token.

According to the method shown in Fig. 1, general information about an item is provided by a user in a step 2, information about the owner of the item is provided by at least one further user in a step 3, the information about the owner of the item is confirmed in a step 4, and in a step 5 a non-fungible token is created based on the general information about the item, wherein the step 5 of generating the non-fungible token comprises storing the confirmed information about the owner of the item in the non-fungible token.

That the confirmed information about the owner of the item is stored in the non-fungible token has the advantage that the lawful owner of the item can always be identified, whereby immutable trust can be created. The method can also be used to reissue a stolen or lost non-fungible token in a simple manner to its lawful owner, wherein the non-fungible token can be reissued based on the owner's validated identity and a proof of creation of the item, wherein retrieving the non-fungible token can be further subject to legal due diligence, and wherein the lost or stolen original non-fungible token is burnt.

Further, the non-fungible token can be generated in an effective and cost-efficient manner, as the provided information can easily be provided via known input means, wherefore no expensive and time-consuming modifications of the corresponding data processing system are required.

Therefore, Fig. 1 shows a method 1 for generating an improved non-fungible token associated to an item.

As shown in Fig. 1, the method further comprises a step 6 of confirming the general information about the item, wherein the non-fungible token is generated based on the confirmed general information about the item, and wherein the general information can for example be confirmed based on input provided by at least a third party.

According to the embodiments of Fig. 1, the step 3 of confirming the information about the owner of the item comprises verifying the credentials of the user, for example by verifying biometric information of the user such as fingerprint recognition or biometric iris recognition, or by a KYC (Know Your Customer) process, wherein the non-fungible token is only generated if the credentials of the owner of the item have been successfully verified.

As shown in Fig. 1, the method further comprises a step 7 of, for all parts of the item, respectively providing information about the creation of the corresponding part of the item, and a step 8 of, for all parts of the item, respectively validating the information about the creation of the corresponding part of the item. The shown step 5 of generating the non-fungible token further comprises, for all parts of the item, respectively storing the validated information about the creation of the corresponding part of the item in the non-fungible token together with information about when the corresponding part of the item was created and/or an IP address used when creating the corresponding file or part of the item and/or an electronic signature of the creator of the corresponding file or part of the item.

Therein, the information when the corresponding file or part of the item was created can include a time stamp including information about a particular date and a particular time when the corresponding file or part of the item was created.

According to the embodiments of Fig. 1, the step 5 of generating the non-fungible token comprises using a cryptographic function to create a digest based on the confirmed information about the owner of the item and/or the validated information about the creation of each of the parts of the item, respectively together with the information about when the corresponding part of the item was created and/or the IP address used when creating the corresponding part of the item and/or the electronic signature of the creator of the corresponding part of the item, wherein the digest is thereafter stored in the non-fungible token.

Therein, the computed digest can be included in smart contract instructions for minting the non-fungible token.

Further, the computed digest and standard attributes, for example a validity period of the non-fungible token and a type of the non-fungible token, are used to create the non-fungible token and to map a smart contract respectively agreement to the non-fungible token, wherein the corresponding smart contract can be executed on the blockchain of choice. In particular, the computed digest and the standard attributes are processed to be included into corresponding smart contract instructions for minting the non-fungible token, wherein the non-fungible token is created in such a way, that the provided information characterizing the item is stored in the metadata of the non-fungible token unique resource identifier.

According to the embodiments of Fig. 1, the generated non-fungible token is further stored in a decentralized storage system, in particular a blockchain ledger. Therein, the particular decentralized storage system, on which the generated non-fungible token is stored, can for example be selected by a user.

A blockchain is a distributed ledger, similar to a database, wherein the ledger is dispersed across multiple computers that can be connected by a network. In particular, a blockchain is a ledger through which data is added and updated in real-time, wherein, once the data is added to the ledger, it cannot be removed or simply edited anymore.

The blockchain ledger can be configured to maintain a verified blockchain public ledger version of the created non-fungible token, whereby a non-fungible token and for example ownership of the corresponding item can easily and reliably be validated.

The created non-fungible token can then be hold in custody or be transferred to a wallet of the user or owner that has provided the item.

With uploading the item or the general information about the item in step 2, the owner of the item can also define whether the item should remain in the public or the private domain, wherein the choice of the user determines accessibility to the item and external user privileges.

The non-fungible token may be issued in several different scenarios for both, online and offline usage. For example, the non-fungible token may be issued to authenticate a medical device or an IoT-device. However, the created non-fungible token may for example also be used as collateral for financing regarding trade finance or as deed of ownership. Further, the created non-fungible token may for example also allow for broader application in insurance risk transfer contracts, or to protect and verify information such as intellectual property, media rights, news, scholarly articles, scientific research, art, or computer code.

Based on the created non-fungible token, further a legally binding, time stamped and reliable mechanism for authenticating items or contracts is provided.

Therein, as shown in Fig. 1, the method 1 further comprises a step 9 of authenticating the item based on the created non-fungible token associated to the item.

Based on the authentication of the item, further steps, for example security relevant steps may then be initiated. For example, in step 9 a medical device can be authenticated based on the created non-fungible token associated to the medical device, wherein, based on the authentication, it can be validated if it is allowed to correspondingly access and/or to update the medical device, and wherein the corresponding medical device can only be accessed or updated if it has been validated that it is allowed to access and/or update the medical device. Further, for example an IoT-device may only be used if it the IoT-device has been authenticated, so that traceability of the data and operations created and performed by the corresponding IoT-device can be ensured.

According to the embodiments of Fig. 1, based on the authentication process in step 9, only a limited, non-critical set of information associated with the item linked to the corresponding token is displayed on a display, if the authentication of the item was not successful, and a full set of information associated with the item is displayed, if the authentication of the item was successful.

Further, if the authentication was not successful, security relevant actions, for example issuing a notice to the owner of the system, a producer or a seller, or shutting down the item can be initiated.

Further, the method can be implemented in such a way, that a user that wants to authenticate the item can hold native utility tokens, in order to be able to request for authentication of the item to be linked to the created non-fungible token, whereby the security can be further improved. On the other hand, authentication of an item linked or associated with the created non-fungible token in the private domain may be limited to nominated users or authenticated approved users.

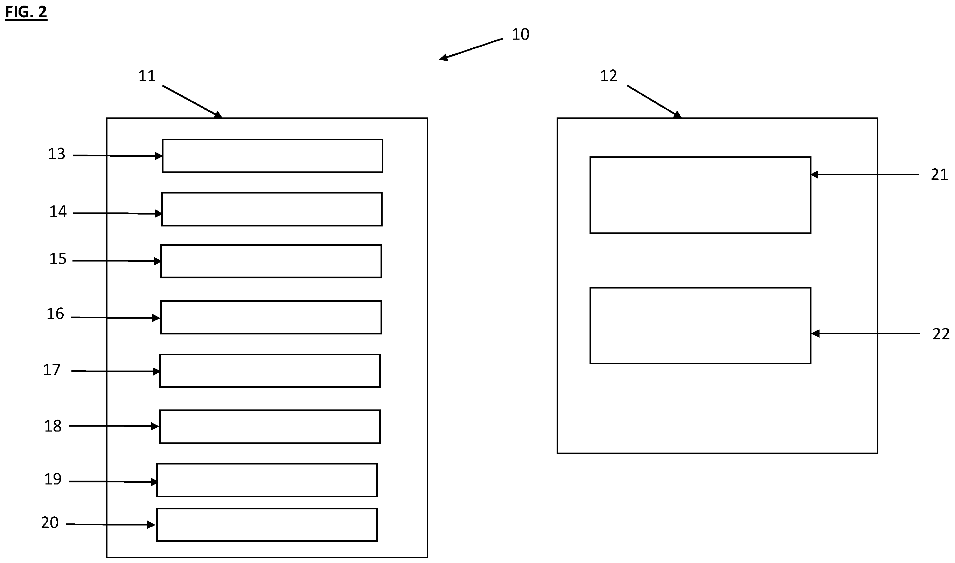

Fig. 2 illustrates a system 10 for authenticating items according to embodiments of the invention.

As shown in Fig. 2, the system 10 comprises a system for generating a non-fungible token associated to an item 11, and a system for authenticating an item 12.

According to the embodiments of Fig. 2, the system for generating a non-fungible token associated to an item 11 comprises a first input device 13 for providing general information about the item by a user, usually the owner of the item, at least one second input device 14 for providing information about the owner of the item, a confirming device 15 that is configured to confirm the information about the owner of the item, and a generating device 16 that is configured to generate a non-fungible token associated with the item based on the general information about the item, wherein the generating device is further configured to store the confirmed information about the owner of the item in the non-fungible token.

The generating device can for example be realized based on code that is stored in a memory and executable by a processor.

According to the embodiments of Fig. 2, the system 10 can be further configured in such a way, that the general information about the item can be confirmed, for example based on input provided by corresponding input means, wherein the generating device 16 is configured to generate the non-fungible token based on the confirmed general information about the item

The confirming device can for example also be realized based on code that is stored in a memory and executable by a processor and/or corresponding sensing means for example biometric sensing devices. In particular, according to the embodiments of Fig. 2, the confirming device 15 is configured to confirm the information about the owner by verifying the identity of the owner of the item and/or biometric identifiers of the owner of the item.

As shown in Fig. 2, the system for creating a non-fungible token associated to an item 11 further comprises a providing device 17 that is configured to, for all parts of the item, provide information about the creation of the corresponding part of the item, and a validating device 18 that is configured to, for all parts of the item, validate the provided information about the creation of the corresponding part of the item, wherein the generating device 16 is configured to, for parts of the item, store the validated information about the creation of the corresponding file or part in the non-fungible token together with information when the corresponding file or part of the item was created, and/or an IP address used when creating the corresponding file or part of the item and/or an electronic signature of the creator of the corresponding file or part of the item.

Therein, also the providing device and the validating device can for example both be realized based on code that is stored in a memory and executable by a processor.

According to the embodiments of Fig. 2, the generating device 16 is further configured to use a cryptographic function to create a digest based on the confirmed information about the owner of the item and/or the validated information about the creation of each of the parts of the item, respectively together with the information about when the corresponding part of the item was created and/or the IP address used when creating the corresponding part of the item and/or the electronic signature of the creator of the corresponding part of the item, wherein the digest is stored in the non-fungible token.

The shown system for generating a non-fungible token associated to an item 11 further comprises a storing device 19 that is configured to store the generated non-fungible token on a decentralized storage system.

The storing device can for example be realized based on code that is stored in a memory and executable by a processor.

There is further shown a receiver 20 for receiving at least one governance parameter for the non-fungible token, wherein the generating device 16 is configured to generate the non-fungible token based on the computed digest and the at least one governance parameter.

As further shown in Fig. 2, the system for authenticating an item 12 comprises a further receiver 21 for receiving the non-fungible token associated to the item generated by the system for generating a non-fungible token associated to an item 11 and an authentication device 22 that is configured to authenticate the item based on the created non-fungible token associated to the item.

Therein, the authentication device can for example be realized based on code that is stored in a memory and executable by a processor.

The shown system is further configured to execute a method for authenticating an item as described above.

## Claims

1. Method for generating a non-fungible token associated to an item, wherein the method (1) comprises the steps of:
- providing general information about the item (2);
- providing information about the owner of the item (3);
- confirming the information about the owner of the item (4); and
- generating the non-fungible token based on the general information about the item, wherein the step of generating the non-fungible token comprises storing the confirmed information about the owner of the item in the non-fungible token (5).

2. Method according to claim 1, wherein the method (1) further comprises the step of confirming the general information about the item (6), and wherein the non-fungible token is generated based on the confirmed general information about the item (5).

3. Method according to claim 1 or 2, wherein the step of confirming the information about the owner of the item (4) comprises verifying the identity of the owner of the item and/or biometric identifiers of the owner of the item.

4. Method according to one of claims 1 to 3, wherein the method (1) further comprises the steps of, for all parts of the item, providing information about the creation of the corresponding part of the item (7), for all parts of the item validating the provided information about the creation of the corresponding part of the item (8), wherein, for all parts of the item, the validated information about the creation of the corresponding part is respectively stored in the non-fungible token together with information about when the corresponding part of the item was created and/or an IP address used when creating the corresponding part of the item and/or an electronic signature of the creator of the corresponding part of the item.

5. The method according to claim 4, wherein the method (1) comprises the step of using a cryptographic function to create a digest based on the confirmed information about the owner of the item and/or the validated information about the creation of each of the parts of the item, respectively together with the information about when the corresponding part of the item was created and/or the IP address used when creating the corresponding part of the item and/or the electronic signature of the creator of the corresponding part of the item, and wherein the digest is stored in the non-fungible token.

6. Method according to one of claims 1 to 5, wherein the method further (1) comprises the step of storing the non-fungible token on a decentralized storage system.

7. Method according to one of claims 1 to 6, wherein the method further comprises the step of providing at least one governance parameter for the non-fungible token, and wherein the step of generating the non-fungible token comprises generating the non-fungible token based on the general information about the item and the at least one governance parameter.

8. Method for authenticating an item, wherein the method (1) comprises the steps of:
- Generating a non-fungible token associated to the item by a method for generating a non-fungible token associated to an item according to one of claims 1 to 7; and
- Authenticating the item based on the generated non-fungible token associated to the item (9).

9. System for generating a non-fungible token associated to an item, wherein the system (11) is configured to execute a method for generating a non-fungible token associated to an item according to one of claims 1 to 7.

10. System for authenticating an item, wherein the system (12) comprises a receiver (21) that is configured to receive a non-fungible token associated to an item generated by a system for generating a non-fungible token associated to an item according to claim 9, and wherein the system (12) is configured to execute a method for authenticating an item according to claim 8.

11. Computer program product comprising instructions which, when executed by a computer, cause the computer to carry out the steps of the method for generating a non-fungible token associated to an item according to one of claims 1 to 7.
